# EUROPEAN PATENT APPLICATION

(11) **EP 2 650 403 A2**
(43) Date of publication of application: **16.10.2013**
(21) Application number: 11813914.6
(22) Date of filing: 09.12.2011
(51) Int. Cl.: C25C 1/20, C25C 7/06, C22B 3/04, C25C 7/00, C25D 3/46

(54) **ELECTRORECOVERY OF GOLD AND SILVER FROM THIOSULPHATE SOLUTIONS**

(30) Priority: 09.12.2010 MX 2010013510
(71) Applicant: Universidad Autónoma Metropolitana, C.P. 14387 Mexico D.F. (MX)
(72) Inventor: LAPIDUS LAVINE, Gretchen Terri, México D.F. 04650 (MX); ALONSO GÓMEZ, Alejandro Rafael, Estado de México 57210 (MX)
(74) Representative: Grünecker, Kinkeldey, Stockmair & Schwanhäusser
(86) International application number: PCT/MX2011/000150
(87) International publication number: WO 2012/078019

(57) **Abstract**

The present invention is related to the mining industry and treatment of mineral and materials that contain gold and silver. Specifically, it is related to a process to recover gold and silver, from copper thiosulfate solutions with a autogenerated electrolysis process. The advantages of the present invention, relative to those of the state of the technique, reside in the increased velocity compared with cementation using copper, without employing electric current. Our process is characterized by operating in an electrochemical autogeneration cell, in which the anode and cathode are connected in short circuit and the anodic and cathodic compartments are separated by an ion exchange membrane. Additionally, using a copper anode and the stripped solution as the anolyte, the levels of soluble copper are maintained stable, conserving the leaching power of the thiosulfate solutions, whereby it is possible to recycle them back to the leaching stage.

## Description

### FIELD OF THE INVENTION

The present invention is related to the mining industry and treatment of mineral and materials that contain gold and silver. Specifically, it is related to a process to recover gold and silver, from copper thiosulfate solutions with a autogenerated electrolysis process, in which the metallic values are recovered from the rich solution in the cathodic compartment. The barren solution is then used as the anolyte, re-establishing the copper concentration needed to be recycled back to the leaching stage.

### BACKGROUND OF THE INVENTION

At present, gold and silver are obtained from their minerals, concentrates and other materials, using different processes. These processes are in function of the nature of the gold and silver containing material, as well as their grade. Accordingly, if it is a high grade material, smelting is employed. On the other hand, if the material contains only small amounts of gold and silver, a hydrometallurgical treatment is usually selected (leach-ing).

Since the end of the XIX century, the process based on cyanide solutions, has been successfully used for leaching gold and silver from low grade materials. However, cyanide solutions are highly toxic. Additionally, some materials are refractory towards this process or contain a high copper concentration, which consumes large amounts of cyanide during leaching, as the following article teaches [G. Senanayake, Gold leaching in noncyanide lixiviant systems: critical issues on fundamentals and applications, Mineral Engineering 2004(17)785-201].

Several alternatives to cyanidation have been proposed, among them is the method based on thiosulfate. This chemical system has been utilized, on a pre-industrial scale, since the 1920's [Fathi Habashi. A Textbook of Hydrometallurgy, 2nd edition (Second ed). Quebec City, Canada: Métallurgie Extractive Québec, 1999]. However, the elevated reagent consumption, caused by its oxidation to tetrathionate and even sulfate by the cupric ions (Cu(II)), has hindered its large scale implementation.

Recently, this inconvenience has been solved with additives that modify the oxidative properties of the cupric ions, [Gretchen Lapidus-Lavine, Alejandro Rafael Alonso-G6mez, José Angel Cervantes-Escamilla, Patricia Mendoza-Muñoz and Mario Francisco Ortiz-Garcia, "Mejora al Proceso de Lixiviación de Plata de Soluciones de Tiosulfato de Cobre (Improvement to the Silver Leaching Process with Copper Thiosulfate Solutions)"], Mexican patent granted the 26th of February 2008, MX 257151], by limiting thiosulfate consumption to less than 5% of its initial value [Alonso-Gómez, A.R. and Lapidus, G.T. (2009), "Inhibition of Lead Solubilization during the Leaching of Gold and Silver in Ammoniacal Thiosulfate Solutions (effect of phosphate addition)", Hydrometallurgy, 99(1-2), 89-96].

On the other hand, the recovery of values from the thiosulfate baths has been performed principally by cementation, in which a reducing agent, usually a metal, is added to generate a redox reaction which produces gold and silver in their metallic state. A disadvantage of this technique is that it is not possible to adequately control the reductive capacity of the agent, which causes a poor separation efficiency, obtaining gold and silver contaminated with copper.

Direct electrodeposition, used as a separation method, is a viable option, including from solutions with low concentrations of gold and silver, even when the copper ion concentration is more than 50 times greater than that of silver and over 100 times that of gold [Alonso-Gómez, A.R., Lapidus, G.T. and González, I., "Proceso de Lixiviación y Recuperación de Plata y Oro con Soluciones de Tiosulfato Amoniacales de Cobre, solicitud PCT/MX2009/000022, fecha 14 Marzo 2008 (WO20097113842, publicada 17 Septiembre 2009)]. To attain efficiencies greater than 50%, a rotating cylinder electrode was employed in a reactor with separate anodic and cathodic compartments in order prevent the oxidation of the thiosulfate and the re-oxidation of the deposited gold and silver. In this type of cell, deposits were obtained with less than 2% impurities [Alonso, A.R., Lapidus, G.T. and Conzález, I. (2008), "Selective silver electroseparation from ammoniacal thiosulfate leaching solutions using a Rotating Cylinder Electrode reactor (RCE)", Hydrometallurgy, 92 (3-4), 115-123].

Despite the excellent results obtained with this type of reactor, the relatively low current efficiencies can be considered a disadvantage due to the high cost of electricity.

Recently, autogenerated electrolyses have been explored. These consist of a two electrode cell, in which metal ions are reduced and deposited on the cathode, differing from a traditional current-driven electrodeposition, in the fact that the anode is made of a material whose oxidation potential is less than the reductive potential of the metal ions and therefore does not require addition electricity to drive the process. Upon anode oxidation, an electron flow travels through an electrical conductor to the cathode, where the electrodeposit occurs. For this reason, the anodic and cathodic compartment must be separated by an ion exchange membrane.

Autogenerated electrolysis shares with cementation the principle that the oxidation of a metal is used to reduce another more noble.

However, in autogenerated electrolysis, the separated anodic and cathodic compartments allow, on one hand, the election of the substrate upon which the metal is deposited (similar to a conventional electrolysis), eliminated the contamination of the deposit. On the other, because the anode is in contact with a solution which is different from the one that contains the metallic ions to be deposited, it is also possible to tailor the anolyte composition according to the requirement of the process and in this manner modulate the reductive power of the system.

This procedure is adequate for gold and silver recovery from thiosulfate solutions, eliminating the need for electrical energy through the oxidation of a metallic anode. It is important to mention that the election of the anode material will depend on the difference between the redox potentials of the anode and cathode, as well as the advantages that the dissolution of a certain material might offer to the process. This should result in lower process costs.

### OBJECTIVES OF THE INVENTION

One objective of the present invention is to provide a selective separation process for gold and silver from thiosulfate solutions, at an increased velocity compared with copper cementation, without the use of electrical current.

Another objective is to accomplish the aforementioned task using the barren solution as the anolyte, conserving in this manner the level of soluble copper, in order to maintain the composition of the thiosulfate solution so that it can be recycled back to the leaching stage.

Other objectives and advantages that apply the principles and are derived from the present invention may be apparent from the study of the following description and diagrams that are included here for illustrative and not limitative purposes.

### BRIEF DESCRIPTION OF THE INVENTION

The present invention is designed to solve the problem of gold and silver separation from copper thiosulfate leaching solutions, providing an improvement over the traditional separation methods (cementation and external current-driven electrolysis). This improvement is characterized by the use of a novel autogenerated electrolysis process, employing a commercial copper sheet as the anode and a titanium cathode, in a reactor with anodic and cathodic compartments separated by ion exchange membrane which prevents the contamination of the thiosulfate solution.

The membrane achieves the purpose of separating the anodic and cathodic sections, to prevent the solutions used in each compartimentsto from mixing. This is important to avoid cementation of gold and silver on the copper surface, which slows the process and contaminates the product. On the other hand, it is important to consider that the rich (pregnant) solution (located in the cathodic compartment) is poor in copper due to the nature of the leaching process, and its oxidation power is limited; this allows an efficient gold and silver deposition because there is little re-dissolution. By preventing contact of the pregnant solution with the copper anode, the copper concentration in this solution is kept low and for this reason the membrane plays a double role.

In order to better understand the characteristics of the invention, the following description is accompanied by diagrams and figures, which form an integral part of the same and are meant to be illustrative but not limitative and are described in the following section.

### BRIEF DESCRIPTION OF THE DRAWINGS

Figure 1 is a schematic diagram of the process for electrodepositing gold and silver in an electrochemical autogeneration cell.
Figure 2 shows a schematic diagram of the electrochemical autogeneration cell
Figure 3 corresponds to a graph indicating the change in the silver concentration during the electrolysis performed in Example 1.
Figure 4 is a diagram of the recirculation process of lots A and B of the leaching solution, used in Example 2.
Figure 5 shows a graphic representation of the silver concentration change during the first leach LA1, performed on lot A (solid lines and markers), as well as during the first autogenerated electrolysis Ca1 (dotted line, hollow markers).
Figure 6 is a series of graphs that compare the quantity of silver remaining in solution throughout the electrolyses Ca1, Ca3 and Ca5 performed on lot A (markers ○, □ and Δ, respectively).
Figure 7 shows the lead concentration during the first leach LA1 performed on lot A.

### DETAILED DESCRIPTION OF THE INVENTION

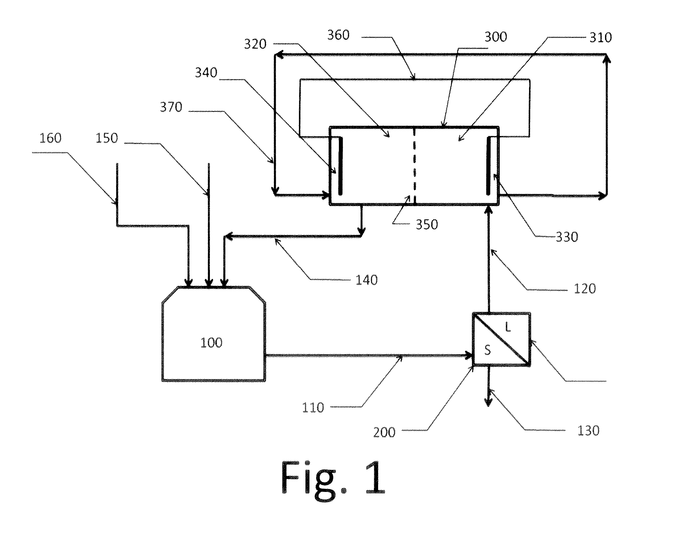

The process referred to in the present is performed according to the illustration in Figure 1:
- An ammoniacal thiosulfate solution pregnant with gold and silver ions, originating from the leaching stage (100) and after having been filtered (200), is introduced into the cathodic compartment (310) of the electrochemical reactor (300).
- The electrochemical reactor possesses and ion exchange membrane (350) that separates the cathodic (310) and anodic (320) compartments.
- A solution, stripped of the precious metals (360), is introduced into the anodic compartment of the electrochemical reactor (320).
- The cathode (330) and anode (340) are connected in short circuit (360)
- The solutions in the cathodic and anodic compartments (310 and 320) are stirred during the entire time of the electrodeposition process that could range from ½ to 4 hours.
- Once the electrodeposition process has finished, the cathode (330) is removed from the reactor and mechanically scraped to obtain the gold and silver metals. The solution in the cathodic compartment is placed in the anodic compartment, ready for the next electrodeposition cycle (360).
- The solution in the anodic compartment (320), having been enriched with the necessary reagents (copper ions), is recycled back to the leaching stage (140).
- The leaching reactor is charged with fresh leachable solid material (160). Fresh solution (150) is only fed to the leaching reactor in the initial cycle.

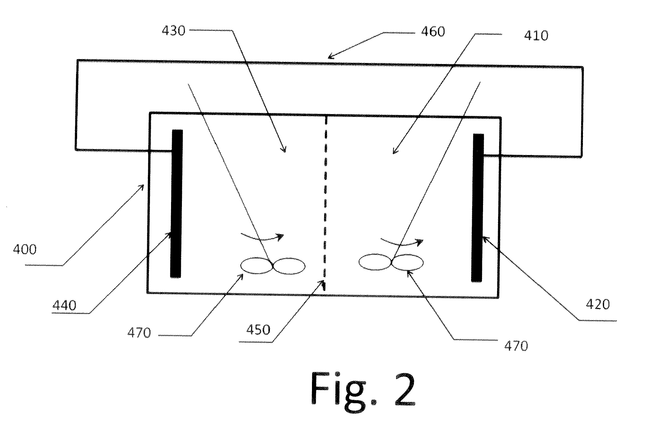

The operation of the electrochemical autogeneration reactor is represented in Figure 2:
- The reactor consists a single preferentially rectangular reservoir (400), although it is not limited to said configuration.
- The reactor is divided in at least two compartments, although it may have more.
- The compartments are divided by a cationic membrane (450) that hinders the passage of silver-thiosulfate and gold thiosulfate ions from the cathodic (410) to the anodic (430) compartment.
- The cathode (420) can be a titanium sheet or screen.
- The anode (440) is a copper sheet.
- Once the solutions are charged to the reactor, the electrodes are connected in short circuit (460).
- The solutions are mechanically stirred (470) during the electrodeposition time.
- The cathode should be mechanically treated to remove the gold and silver deposit.
- The anode should be changed periodically, since it is consumed during the electrodeposition process.

### EXAMPLES

### EXAMPLE 1

To better understand the invention, one of the many experiments is detailed as an example, which employs a reactor such as that schematized in Figure 2. A 60 cm² (exposed geometrical area) titanium plate was used as the cathode and a copper plate with the same exposed area was the anode. A synthetic solution, prepared with the composition that appears in Table 1, which simulates real solutions after the leaching stage, was introduced into the cathodic compartment (410).

**Table 1. Composition of the solution used in the cathodic compartment of the autogeneration electrolytic reactor.**

| Component | Composition (mol/L) |
|---|---|
| Ag(I) | 1 x 10⁻³ |
| Na₂S₂O₃ | 0.2 |
| CuSO₄ | 0.05 |
| EDTA⁴⁻ | 0.025 |
| (NH₄)₂(HPO₄) | 0.1 |
| NH₃ | 0.6 |

A synthetic solution, poor in copper ions, whose composition is detailed in Table 2, was placed in the anodic compartment (430).

**Table 2. Composition of the solution used in the anodic compartment of the autogeneration electrolytic reactor**

| Component | Composition (mol/L) |
|---|---|
| Na₂S₂O₃ | 0.2 |
| CuSO₄ | 0.025 |
| EDTA⁴ | 0.025 |
| (NH₄)₂(HPO₄) | 0.1 |
| NH₃ | 0.6 |

The solutions were prepared with analytical grade reagents and deionized water (1x10¹⁰ MΩcm⁻¹). Once the solutions were placed in their respective compartments, the electrodes were connected in short circuit. Stirring in both compartments was maintained during the electrodeposition process. Samples of the solution were taken every 20 minutes for four hours, after which time the test was detained. The samples were analyzed for silver and copper with atomic absorption spectrometry.

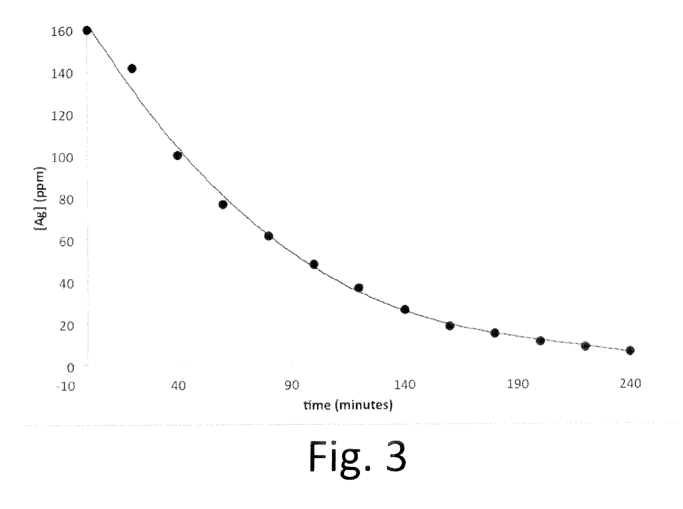

In Figure 3, a graphic representation is shown of results of the electrodeposition process, performed in the reactor of Figure 2. The decrease in silver concentration is constant from the beginning of the electrolysis, attaining 50% of its initial value after only 60 minutes. Subsequently, the descent is slower, typical of first order reaction kinetics in a batch reactor, reaching 4% after 4 hours.

On the other hand, the copper concentration in the cathodic compartment remained constant during the electrolysis (data not shown), indicative of a selective silver deposit.

In order to determine the leaching power of the recycled solution, after having stripped the silver ions in the autogeneration process, experiments were performed with real leaching solutions, whose results are shown in the following example.

### EXAMPLE 2

As was shown in Figure 1, the recirculation scheme used in the present invention employs two lots of the thiosulfate leaching solution, which are alternated in each one of the reactor compartments (Figure 2), as was mentioned in the Detailed Description section. The same reactor was used as in Example 1, with a copper sheet as the anode and a titanium sheet as the cathode, both with an exposed geometric area of 60 cm².

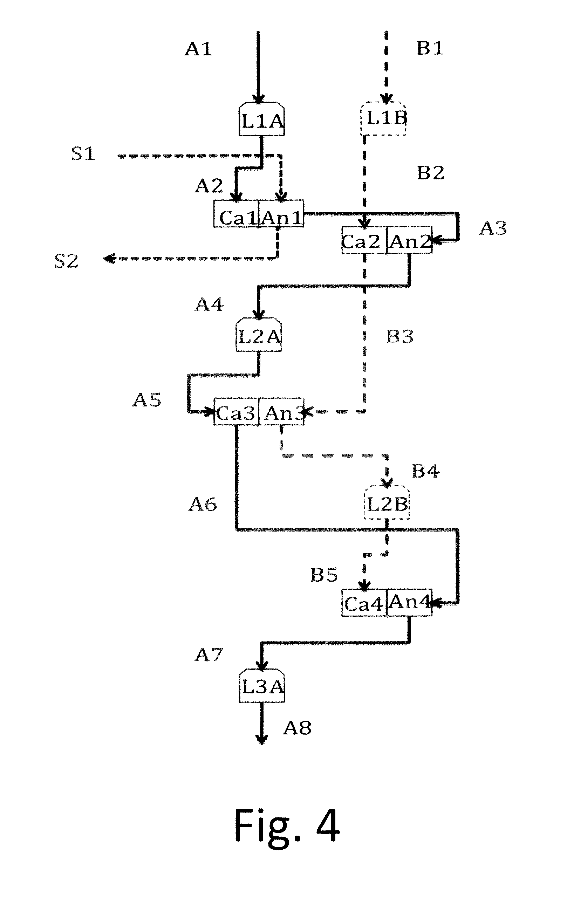

To better understand the process, a block diagram is shown (Figure 4), in which the passage through the process of lots A and B of the leaching solution are shown, without the solid streams. By observing only lot A (solid lines), stream A1 enters the first leach (LA1), and after separating out and discarding the solid residue, stream A2 (pregnant solution) enters the cathodic compartment (Ca1) of the electrolytic reactor, where the silver electrodeposition takes place; only in this stage of the process is synthetic solution (Stream S1) used in the anodic compartment (An1).

Stream A3, stripped of its values, is placed in the anodic compartment of the reactor (An2), where the first electrodeposit from the pregnant solution lot B (Ca2) occurs.

Stream A4 is sent back to a new leaching stage (LA2), where it is contacted with fresh mineral. The pregnant solution (A5) is sent to the electrochemical reactor for silver recovery in the cathodic compartment (Ca3). In this case, the anodic compartment is occupied by the solution of lot B originating from Ca2.

Subsequently, the process is repeated, passing the stream A6 to the anodic compartment (An4) during the electrodeposition of B5 (Ca4).

Finally, stream A7 is again introduced into the leaching stage with fresh mineral, obtaining a pregnant solution in stream A8.

The route that lot B follows is practically the same as lot A. Table 3 shows the initial composition used in the leaching solutions for both lots; the volume of each one was 250 mL. Each leach used 2.5 g of a lead concentrate from Fresnillo mine, whose silver content is 24 kg/ton with approximately 25% of lead.

**Table 3. Composition of the leaching solutions used in lots A and B.**

| Component | Composition (mol/L) |
|---|---|
| Na₂S₂O₃ | 0.2 |
| CuSO₄ | 0.05 |
| EDTA⁴ | 0.025 |
| (NH₄)₂(HPO₄) | 0.1 |
| NH₃ | 0.6 |

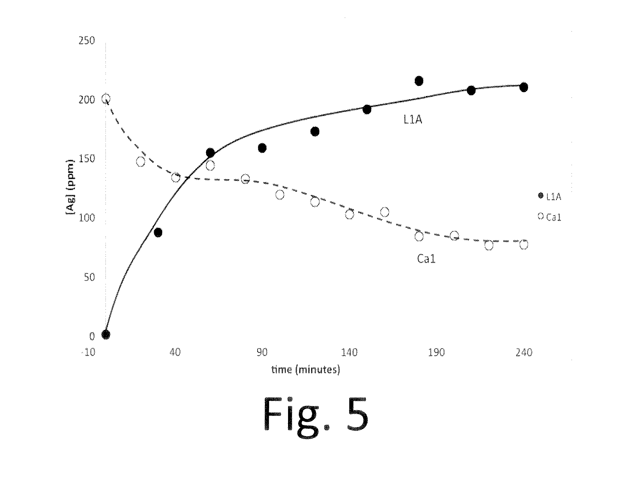

In Figure 5 the silver concentration during the first leach is shown (solid lines and markers), as well as the electrodeposition process in the cathodic compartment Ca1 (dashed line and hollow markers). It is important to consider that the silver content in this mineral is very high, explaining the reason for extractions above 200 ppm, a value close to the solubility limit for this metal ion in thiosulfate solutions. These high values of silver in solution are the reason that the silver concentration only decreases to 50% of its original value in the autogenerated electrolysis (Ca1). Additionally, because of the high dissolved lead concentration (200 ppm), there is competition with the silver in the electrodeposition process. This could represent an enormous loss in the traditional cyanidation process; however, in this case, the thiosulfate solution is recycled back to the leaching stage, the gold and silver remaining in solution are separated in subsequent cycles.

In the subsequent leaches performed with lot A, within the recirculation scheme, extractions similar to that observed in LA1 were achieved (approximately 200 ppm silver ions). The results obtained in leaches with lot B are very similar, again observing the solubility limitation of 200 ppm Ag(I). These results are significant since they show that the thiosulfate solution maintains its leaching power after three cycles of leachingelectrodeposition, in which no additional reagent was added to make-up the solutions.

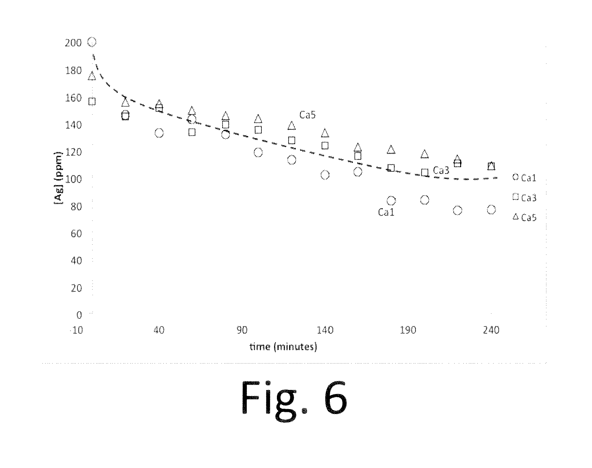

Finally, a comparison of the change in silver concentration during the autogenerated electrolyses for lot A is shown in Figure 6. The electrolyses Ca3 and Ca5 present similar behavior to that registered for Ca1 (first electrolysis of lot A). The quantity of silver that remains after the electrolyses Ca2 and Ca3 is similar, indicating that there is no accumulation of silver ions in the recycling process; in other words, the silver extracted in the leach is separated in the autogenerated electrolysis stage. The behavior of lot B during the electrolyses (data not shown here) is practically the same exhibited by lot A.

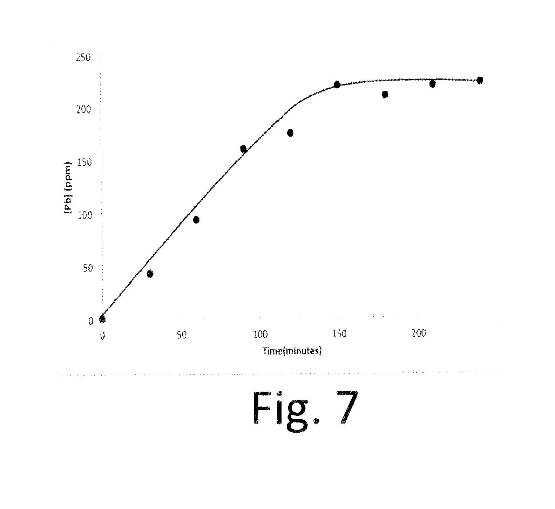

It is important to remember that the mineral leached was a lead concentrate, the reason for which an important quantity of this metal dissolved, despite the use of phosphate to inhibit this process. In Figure 7, the lead concentration is shown during the first leach of lot A, where it can be appreciated that the concentration of PB(II) is similar to that of silver. Also, in the corresponding electrolysis, the lead concentration decreases approximately y 35% during the first 20 minutes. This competition (inexistent in Example 1 with the synthetic solution) could be the cause that the silver recovery did not exceed 60%. Additionally, it must be considered that treating such high grade silver minerals would originate solubility problems during leaching, as well as electrode saturation in the electrodeposition stage. In these cases, it is possible to increase the thiosulfate concentration to increase the solubility of the Ag(S₂O₃)₂³⁻ complex, even though a larger electroactive area for the cathode would be required.

In any event, these examples are evidence that the use of a autogenerated electrolysis reactor is viable within a leaching-electroseparation scheme, maintaining the leaching capacity of the thiosulfate solution.

## Claims

1. An autogenerated electrolysis cell for the electrorecovery of gold and silver from thiosulfate leaching solutions **characterized by** a cathodic and an anodic compartment separated by a ion exchange membrane, a copper anode and a titanium cathode, connected in short circuit, a catholyte consistent in a pregnant leaching solution and an anolyte, stripped of its gold and silver in the cathodic compartment.

2. A gold and silver electrorecovery process from thiosulfate leaching solutions, in an autogenerated electrolysis cell, consisting of the following steps: in the first stage, feed the cathodic compartment with a solution proceeding from the leaching step, feed to the anodic compartment a synthetic solution similar to the catholyte, but without dissolved gold and silver, maintain the operation of the electrolysis cell during a specified time, mechanically recover the gold and silver deposit, **characterized by** being performed in an autogenerated electrolysis cell as was stated in the previous claim; the predetermined time that the cell operates is that which permits the gold and/or silver concentration in the catholyte and the copper concentration in the anolyte to achieve a predetermined level; successive stages follow the first, in which the anolyte is the catholyte after having been stripped of gold and silver and the leaching solution is the anolyte after having been enriched with copper ions.

3. Gold and silver electrorecovery from thiosulfate leach solutions, as stated in claims 1 ó 2, **characterized** additionally because the predetermined level of the copper concentration is adequate, on one hand, to maintain the potential difference necessary for the autogenerated electrodeposit and, on the other, for gold and silver leaching.
